# EUROPÄISCHE PATENTSCHRIFT

(11) **EP 2 895 730 B1**
(45) Veröffentlichungstag und Bekanntmachung des Hinweises auf die Patenterteilung: **27.11.2019**
(21) Anmeldenummer: 13762462.3
(22) Anmeldetag: 11.09.2013
(51) Int. Cl.: B60K 15/00, F02M 31/20, F02M 37/00, B60K 15/03

(54) **KRAFTSTOFFVERSORGUNGSSYSTEM FÜR DEN VERBRENNUNGSMOTOR EINES KRAFTFAHRZEUGES**
FUEL SUPPLY SYSTEM FOR THE INTERNAL COMBUSTION ENGINE OF A MOTOR VEHICLE
SYSTÈME D'ALIMENTATION EN CARBURANT POUR MOTEUR À COMBUSTION INTERNE DE VÉHICULE AUTOMOBILE

(30) Priorität: 12.09.2012 DE 102012017965
(43) Veröffentlichungstag der Anmeldung: 22.07.2015
(73) Patentinhaber: Rheinmetall Landsysteme GmbH, 29345 Unterlüß (DE)
(72) Erfinder: BRUHN, Ralf, 24259 Westensee (DE)
(74) Vertreter: Dietrich, Barbara
(86) Internationale Anmeldenummer: PCT/EP2013/068848
(87) Internationale Veröffentlichungsnummer: WO 2014/041038

(56) Entgegenhaltungen:
- EP-A1- 0 304 742
- DE-A1- 3 607 854
- DE-A1- 10 001 434
- DE-C1- 3 607 857
- DE-C2- 3 214 874
- JP-A- S61 102 315

## Beschreibung

Die Erfindung betrifft ein Kraftstoffversorgungssystem für den Verbrennungsmotor eines Kraftfahrzeuges, insbesondere eines militärischen Fahrzeuges, mit den im Oberbegriff des Anspruchs 1 angegebenen Merkmalen.

Militärische Kraftfahrzeuge werden zunehmend in Regionen mit hohen Umgebungstemperaturen eingesetzt. Um die Mobilität derartiger Kraftfahrzeuge zu gewährleisten, werden die Motorleistungen entsprechend angehoben. Mit der erhöhten Antriebsleistung und den hohen Umgebungstemperaturen steigen aber auch die Anforderungen an die Antriebskühlanlagen der Fahrzeuge. Diese werden daher in der Regel mit einem Kraftstoffkühler ausgestattet, der dafür sorgen soll, dass der dem Antriebsmotor zugeführte Kraftstoff möglichst kühl ist, da die Temperatur des Kraftstoffes die Motorleistung erheblich beeinflusst.

Üblicherweise werden Motorkühler und Kraftstoffkühler übereinander angeordnet, wobei sich der Kraftstoffkühler oberhalb des Motorkühlers befindet und die vom Kraftstoffkühler abgegebene Wärmelast den darunter liegenden Motorkühler beaufschlagt.

Aus der Druckschrift DE 37 15 111 C1 ist es bekannt bei Kraftfahrzeugen mit Klimaanlagen, welche einen Kältemittel-Kreislauf mit einem Kompressor (Verdichter), einem Kondensator und einem Verdampfer umfassen, jeweils eine von der Motorkühlung gesonderte Kühleinrichtung für den Kraftstoff vorzusehen. Hierzu ist dem Verdampfer der Klimaanlage ein weiterer Verdampfer parallel geschaltet, der als Wärmeaustauscher ausgebildet ist und den durch die Kraftstoffleitung fließenden Kraftstoff kühlt.

Einen anderen Weg, einen aber auch mehrere Verdampfer einzubinden und insbesondere den ersten Verdampfer in einen Kraftstofftank zu integrieren, so dass nicht der durch die Kraftstoffleitungen fließende Kraftstoff lokal nur während eines relativ kurzen Zeitraumes gekühlt wird, sondern der gesamte Kraftstoff gleichmäßig kühlbar ist, gehen die DE 32 14 874 C2 bzw. die US 6,230,692 B1.

So beschreibt die DE 32 14 874 C2 eine Kraftstoffanlage mit einem Kraftstoffvorratsbehälter für eine Otto-Brennkraftmaschine von Kraftfahrzeugen. Hierbei wird der als Verdampfer dienende Wärmeaustauscher oder der diesem nachgeschalteten Wärmeaustauscher zum Kühlen von Kraftstoff im Kraftstoffvorratsbehälter selbst installiert. Erwünscht ist dabei eine Kühlung des Kraftstoffes von ≤ 5°C auch bei verhältnismäßig hoher Außentemperatur.

Die US 6,230,692 B1 betrifft eine Absorptionskälteanlage einer Kraftstoffanlage, wobei der Kraftstofftank neben dem flüssigen Kraftstoff auch Kraftstoffdampf enthält. Hierbei gilt es, den Kraftstoff als auch den Kraftstoffdampf abzukühlen, um den Dampf zu eliminieren. Der Wärmeaustauscher ist dazu im Kraftstoffbehälter bzw. Kraftstofftank eingebunden.

Die in Fahrzeugen, wie Rad- und Kettenfahrzeugen, auch militärisch, werden Kraftstoffe verwendet (Diesel, Kerosin, etc.), die bei Umgebungstemperaturen von 49°C und höher einen Flammpunkt (Temperatur) erreichen können, bei dem sich ein explosionsfähiger Luft/Kraftstoffgemisch bilden kann. Der Flammpunkt bei Dieselkraftstoffen liegt bei +55°C und für Kerosin bei +38°C, bezogen auf 1013 mbar Luftdruck.

Den Ansatz der Kühlung des Kraftstoffvorratsbehälters aufgreifend, liegt der Erfindung die Aufgabe zugrunde, ein Kraftstoffversorgungssystem der eingangs erwähnten Art anzugeben, bei dem die Sicherheit und Mobilität des entsprechenden Fahrzeuges auch bei extrem hohen Umgebungstemperaturen (z. B. bei dem Einsatz eines Kampfpanzers in der Wüste) gewährleistet ist und bei seiner Entnahme aus dem Kraftstofftank eine relativ niedrige vorgebbare Temperatur aufweist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Der Erfindung liegt die Idee zugrunde, den Kraftstoffvorratsbehälter bzw. Kraftstofftank aktiv zu kühlen, um die Mobilität und Sicherheit der Fahrzeuge bei hohen Umgebungstemperaturen zu halten. Dadurch kann auf eine Brand- und Explosionsunterdrückung wie bisher verzichtet werden. Auch wird die thermische Signatur reduziert. Des Weiteren ist vorgesehen, die fahrzeugseitige Kampfraumkühlanlage nicht nur zur Kühlung des Innenraums des Fahrzeuges (Mannschaftraum) sondern auch zur Kühlung des Kraftstofftanks zu verwenden. Dementsprechend werden der Verdampfer bzw. die Verdampfereinheiten von der fahrzeugseitigen Kampfraumkühlanlage gespeist. Dazu wird mindestens einem Verdampfer ein elektrisch regelbares Ventil vorgeschaltet, so dass der mindestens eine Kraftstofftank und/oder ein Innenraum des Fahrzeuges temperaturabhängig mittels einer Mess- und Regelungsvorrichtung gekühlt werden kann.

Die Temperatur des Kraftstoffes in dem Kraftstofftank kann dabei derart gewählt werden, dass sie niedriger als der Flammpunkt des entsprechenden Kraftstoffes ist und somit die Explosionsgefahr des Kraftstofftankes auch bei hohen Umgebungstemperaturen gering ist.

Bei einem ersten Ausführungsbeispiel der Erfindung ist vorgesehen, dass die Kühleinrichtung mindestens einen parallel zu dem ersten Verdampfer angeordneten zweiten Verdampfer umfasst, wobei der zweite Verdampfer zur Kühlung der Luft eines Innenraumes des Fahrzeuges (im Falle eines militärischen Fahrzeuges, etwa des Mannschafts- oder Kampfraumes) dient.

Bei einem Kraftstoffversorgungssystem mit einem von außen mit Kraftstoff befüllbaren Hauptkraftstofftank und einem dem Hauptkraftstofftank nachgeschalteten Entnahmetank, kann der erste Verdampfer der Kühleinrichtung in dem Hauptkraftstofftank oder in dem Entnahmetank angeordnet sein.

Es kann aber auch vorgesehen sein, dass die Kühleinrichtung mindestens einen parallel zu dem ersten Verdampfer angeordneten dritten Verdampfer umfasst, so dass sowohl in dem Hauptkraftstofftank als auch in dem Entnahmetank jeweils ein Verdampfer angeordnet ist.

Als vorteilhaft hat es sich erwiesen, wenn mit der Mess- und Regelungsvorrichtung außer den Ventilen auch Temperatursensoren zur Überwachung der Temperatur des jeweiligen Kraftstofftankes und/oder des Innenraumes des Fahrzeuges verbunden sind.

Der Kompressor und/oder der Kondensator der Kühleinrichtung kann/können von einem separaten Motor oder von dem Verbrennungsmotor (Antriebsmotor) angetrieben werden. Außerdem hat es sich als vorteilhaft erwiesen, wenn auch der Kondensator der Kampfraumkühlanlage separat bzw. unabhängig vom Kühler betrieben wird. Der Kondensator der Kampfraumkühlanlage sollte vor dem Kühler bzw. vor der Kühlanlage des Verbrennungsmotors angeordnet sein.

Es versteht sich, dass die Kraftstoffkühlung mittels Verdampfern auch unabhängig von einer fahrzeugseitigen Kampfraumkühlanlage bzw. Verdampfer im Mannschaftsraum betrieben werden kann. Die erforderliche Antriebsleistung zur Kraftstoffkühlung allgemein kann vom Verbrennungsmotor oder einem Hilfsaggregat (APU) zur Verfügung gestellt werden.

Weitere Einzelheiten und Vorteile der Erfindung ergeben sich aus den folgenden, anhand von Figuren erläuterten Ausführungsbeispielen. Es zeigen:
- Fig. 1: eine schematische Darstellung des erfindungsgemäßen Kraftstoffversorgungssys-tems für ein militärisches Fahrzeug mit Hauptkraftstofftank und Entnahmetank, wobei ein erster Verdampfer der Kühleinrichtung in dem Entnahmetank integriert ist und ein zweiter Verdampfer zur Kühlung eines Mannschaftsraumes des Fahr-zeuges dient;
- Fig. 2: eine Fig. 1 entsprechende Darstellung, bei welcher die Kühleinrichtung einen zu-sätzlichen, dritten Verdampfer umfasst, der in dem Hauptkraftstofftank integriert ist und
- Fig. 3: eine Fig. 2 entsprechende Darstellung, bei welcher ein Kompressor und ein Kon-densator der Kühleinrichtung durch dem Verbrennungsmotor des Fahrzeuges an-getrieben werden.

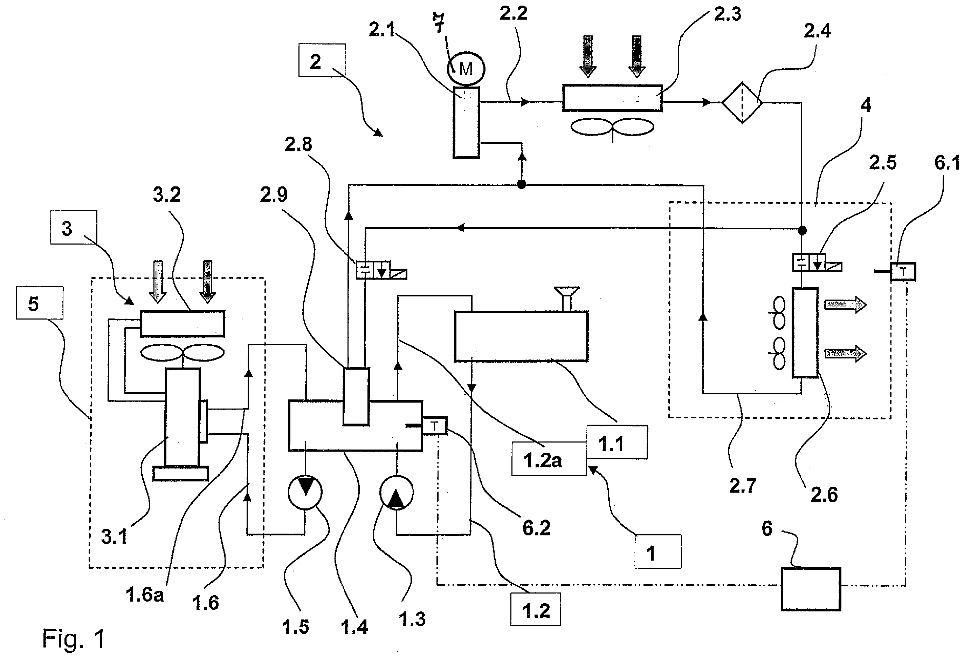

In Fig. 1 sind mit 1 eine Kraftstoffanlage für den Dieselmotor 3.1 einer in einem Triebwerksraum 5 befindlichen Antriebsanlage 3 eines militärischen Rad- oder Kettenfahrzeuges (nicht dargestellt), mit 2 eine Kühleinrichtung und mit 4 ein zu kühlender Mannschaftsraum bezeichnet.

Die Kraftstoffanlage in militärischen Rad- und Kettenfahrzeugen besteht in der Regel aus einem oder mehreren Hauptkraftstofftanks. Die Kraftstoffanlage 1 umfasst somit wenigstens einen mit einem Kraftstoffeinfüllstutzen versehenen Hauptkraftstofftank 1.1, der über eine erste Kraftstoffleitung 1.2 und einer ersten Kraftstoffpumpe 1.3 mit einem Entnahmetank 1.4 verbunden ist. Über eine erste Rücklaufleitung 1.2a kann überschüssiger Kraftstoff aus dem Entnahmetank 1.4 wieder in den Hauptkraftstofftank 1.1 geleitet werden.

Mit Hilfe einer zweiten Kraftstoffpumpe 1.5 wird Kraftstoff aus dem Entnahmetank 1.4 über eine zweite Kraftstoffleitung 1.6 zur Einspritzpumpe des Dieselmotors 3.1 gefördert und über eine zweite Rücklaufleitung 1.6a wird überschüssiger und erwärmter Kraftstoff von der Einspritzpumpe in den Entnahmetank 1.4 zurückgeführt.

Der Dieselmotor 3.1 der Antriebsanlage 3 im Triebwerksraum 5 verfügt über eine mit 3.2 bezeichnete eigene Kühlanlage.

Die Kühleinrichtung 2 besteht aus einem Kompressor 2.1 zur Verdichtung eines geeigneten Kältemittels, der elektrisch oder hydraulisch mittels eines separaten Motors 7 angetrieben wird. Über eine Hochdruck-Kälteleitung 2.2 wird das gasförmige Kältemittel einem Kondensator 2.3 zugeführt und durch Wärmeabfuhr verflüssigt. Dann gelangt das flüssige Kältemittel über eine Filter-/Trocknereinheit 2.4 und über ein elektrisch ansteuerbares, erstes Ventil 2.8 zu einem im Entnahmetank 1.4 angeordneten ersten Verdampfer 2.9 sowie über ein elektrisch ansteuerbares, zweites Ventil 2.5 zu einem im Mannschaftsraum 4 parallel zu dem ersten Verdampfer 2.9 geschalteten zweiten Verdampfer 2.6. Schließlich strömt das von dem ersten Verdampfer 2.9 und von dem zweiten Verdampfer 2.6 gelangende gasförmige Kältemittel über eine Saugleitung 2.7 wieder zu dem Kompressor 2.1.

Zur Ermittlung der Temperaturen in dem Mannschaftsraum 4 und in dem Entnahmetank 1.4 sind mit einer Mess- und Regelungseinrichtung 6 verbundene Temperatursensoren 6.1 und 6.2 (ein oder mehrere) vorgesehen. Die Mess- und Regeleinrichtung 6 dient des Weiteren zur Überwachung und Regelung der Betriebszustände der Kraftstoffanlage 1, wie Füllstand und Temperatur, sowie des Betriebszustandes der Kampfraumkühlanlage 2 und des Mannschaftsraums 4.

Außerdem ist die Mess- und Regelungseinrichtung 6 mit dem ersten Ventil 2.8 sowie mit dem zweiten Ventil 2.5 verbunden, so dass eine temperaturgesteuerte Regelung der beiden Ventile erfolgen kann. Insbesondere kann also vorgesehen werden, dass nur der Mannschaftsraum 4 oder nur der Kraftstoff in dem Entnahmetank 1.4 oder aber Mannschaftsraum 4 und der Kraftstoff in dem Entnahmebehälter 1.4 gleichzeitig kühlbar sind.

Durch sequentielles Ansteuern der ersten Kraftstoffpumpe 1.3 wird der gekühlte Kraftstoff im Umlauf gehalten.

Ferner kann die Wärmelast aus der Mannschaftsraumkühlanlage separat an die Umgebungsluft oder über die Triebwerksanlage abgegeben werden.

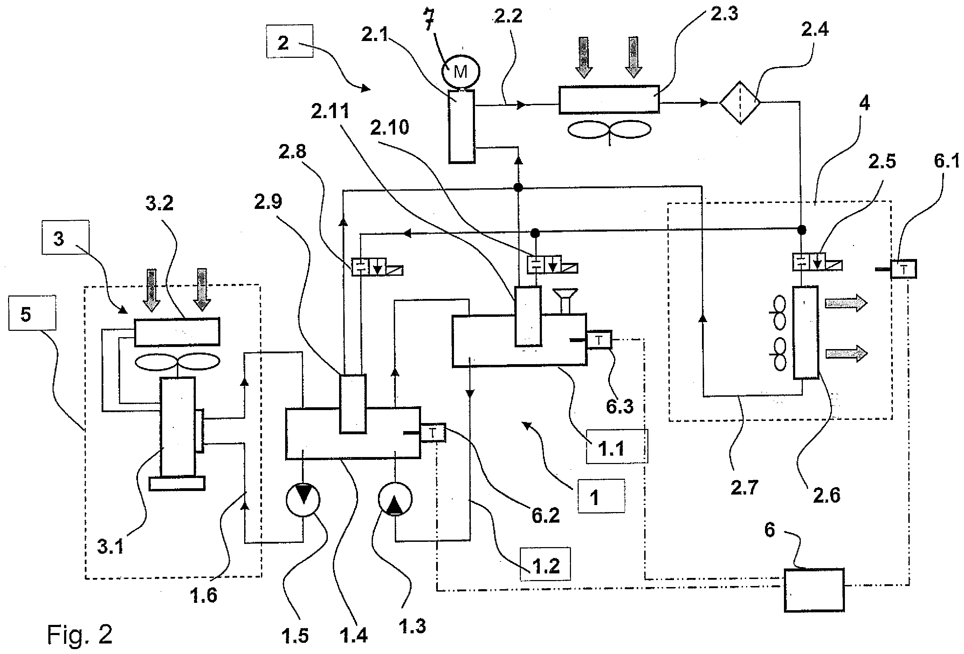

In Fig. 2 ist ein gegenüber Fig.1 etwas abgewandeltes Ausführungsbeispiel dargestellt. Dabei ist vorgesehen, dass sich nicht nur in dem Entnahmetank 1.4 ein Verdampfer 2.9 befindet, sondern auch in dem Hauptkraftstofftank 1.1 ein durch ein drittes Ventil 2.10 ansteuerbarer dritter Verdampfer 2.11.

Die Temperaturüberwachung des Hauptkraftstofftankes 1.1 erfolgt in diesem Fall ebenfalls durch einen Temperatursensor 6.3. Der Temperatursensor 6.3 und das dritte Ventil 2.10 sind ebenfalls mit der Mess- und Regelungseinrichtung verbunden.

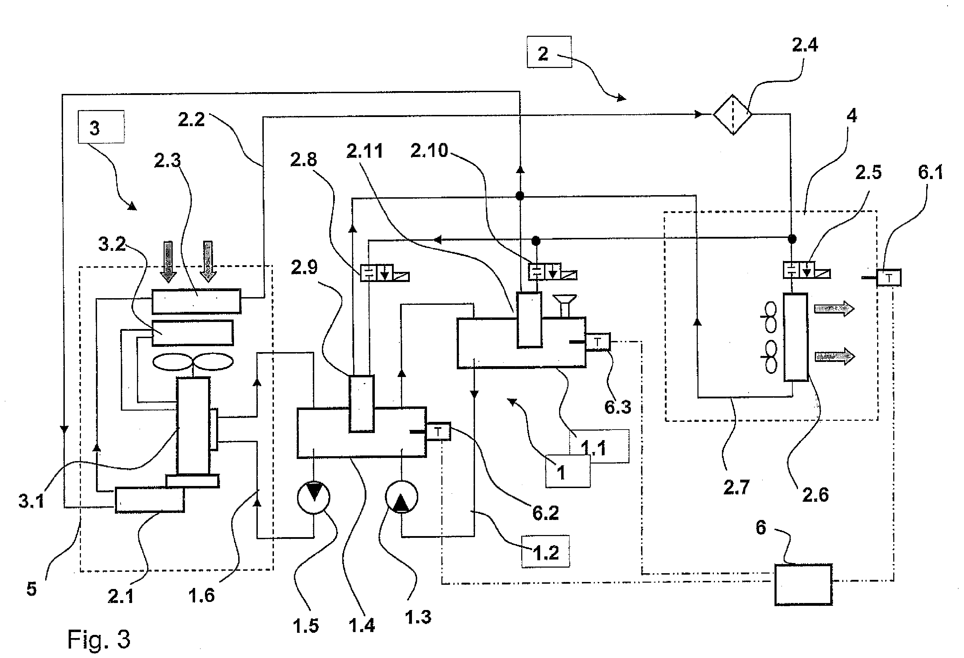

Schließlich wird in Fig. 3 eine weitere Abwandlung der in Fig. 1 und 2 dargestellten Ausführungsbeispiele gezeigt. Dabei wird der Kompressor 2.1 der Kühleinrichtung 2 nicht durch einen separaten Motor, sondern von dem Dieselmotor 3.1 der Antriebsanlage 3 angetrieben. Außerdem ist bei diesem Ausführungsbeispiel der Kondensator 2.3 vor der Kühlanlage 3.2 der Antriebsanlage 3 angeordnet.

### Bezugszeichenliste

- 1: Kraftstoffanlage
- 1.1: (erster) Kraftstofftank, Hauptkraftstofftank
- 1.2: erste Kraftstoffleitung
- 1.2a: erste Rücklaufleitung
- 1.3: erste Kraftstoffpumpe
- 1.4: (zweiter) Kraftstofftank, Entnahmetank
- 1.5: zweite Kraftstoffpumpe
- 1.6: zweite Kraftstoffleitung
- 1.6a: zweite Rücklaufleitung
- 2: Kühleinrichtung
- 2.1: Kompressor
- 2.2: Hochdruck-Kälteleitung
- 2.3: Kondensator
- 2.4: Filter-/Trockeneinheit
- 2.5: (zweites) Ventil
- 2.6: zweiter Verdampfer
- 2.7: Saugleitung
- 2.8: (erstes) Ventil
- 2.9: erster Verdampfer
- 2.10: (drittes) Ventil
- 2.11: dritter Verdampfer
- 3: Antriebsanlage
- 3.1: Verbrennungsmotor, Dieselmotor
- 3.2: Kühlanlage
- 4: Innenraum, Mannschaftsraum
- 5: Triebwerksraum
- 6: Mess- und Regelungseinrichtung
- 6.1-6.3: Temperatursensoren
- 7: Motor

## Patentansprüche

1. Kraftstoffversorgungssystem für einen Verbrennungsmotor (3.1) eines Kraftfahrzeuges, mit mindestens einem Kraftstofftank (1,1, 1.4) zur Bevorratung des Kraftstoffes und mit mindestens einer von einer Motorkühlung (3) gesonderten Kühleinrichtung (2) zur Kraftstoffkühlung, die einen Kompressor (2.1), einen Kondensator (2.3) und mindestens einen Verdampfer (2.9, 2.6, 2.11) umfasst, wobei der Verdampfer (2.9, 2.6, 2.11) der Kühleinrichtung (2) in dem Kraftstofftank (1,1, 1.4) angeordnet ist, **dadurch gekennzeichnet, dass** dem mindestens einen Verdampfer (2.9, 2.6, 2.11) ein elektrisch regelbares Ventil (2.8, 2.5, 2.10) vorgeschaltet ist, so dass der mindestens eine Kraftstofftank (1.1, 1.4) und/oder ein Innenraum (4) des Fahrzeuges temperaturabhängig über eine Mess- und Regelungsvorrichtung (6) gekühlt werden kann und dass das Kraftstoffversorgungssystem mindestens zwei Kraftstofftanks (1.1, 1.4) umfasst, wobei es sich bei dem ersten Kraftstofftank (1.1) um einen von außen mit Kraftstoff füllbaren Hauptkraftstofftank handelt und bei dem mit dem ersten Kraftstofftank (1.1) über eine erste Kraftstoffleitung (1.2) verbundenen zweiten Kraftstofftank (1.4) um einen Entnahmetank handelt, aus dem der Kraftstoff dem Verbrennungsmotor (3.1) zuführbar ist.

2. Kraftstoffversorgungssystem nach Anspruch 1, **dadurch gekennzeichnet, dass** die Kühleinrichtung (2) mindestens einen parallel zu dem Verdampfer (2.9) angeordneten zweiten Verdampfer (2.6) umfasst.

3. Kraftstoffversorgung nach Anspruch 2, **dadurch gekennzeichnet, dass** der zweite Verdampfer (2.6) zur Kühlung der Luft des Innenraumes (4) des Fahrzeuges dient.

4. Kraftstoffversorgungssystem nach einem der Ansprüche 1 bis 3, **dadurch gekennzeichnet, dass** der erste Verdampfer (2.9) der Kühleinrichtung (2) in dem ersten Kraftstofftank (1.1) oder in dem zweiten Kraftstofftank (1.4) angeordnet ist.

5. Kraftstoffversorgungssystem nach einem der Ansprüche 1 bis 3, **dadurch gekennzeichnet, dass** die Kühleinrichtung (2) mindestens einen parallel zu dem ersten Verdampfer (2.9) angeordneten dritten Verdampfer (2.11) umfasst, und dass in dem ersten Kraftstofftank (1.1) der erste Verdampfer (2.9) und in dem zweiten Kraftstofftank (1.4) der dritte Verdampfer (2.11) angeordnet sind.

6. Kraftstoffversorgungssystem nach einem der Ansprüche 1 bis 5, **dadurch gekennzeichnet, dass** Temperatursensoren (6.1-6.3) zur Überwachung des mindestens einen bzw. des jeweiligen Kraftstofftankes (1.1, 1.4) und/oder des Innenraumes (4) des Fahrzeuges vorgesehen sind, deren Messwerte der Mess- und Regelungseinrichtung (6) zuführbar sind.

7. Kraftstoffversorgungssystem nach einem der Ansprüche 1 bis 6, **dadurch gekennzeichnet, dass** die den Verdampfern (2.6, 2.9, 2.11) zugeordneten, elektrisch oder elektronisch ansteuerbaren Ventilen (2.5, 2.8, 2.10) mit Hilfe der Mess- und Regelungseinrichtung (6) automatisch zu- und abschaltbar sind.

8. Kraftstoffversorgunganlage nach einem der Ansprüche 1 bis 7, **dadurch gekennzeichnet, dass** die Temperatur des Kraftstoffes in dem Kraftstofftank (1.1) derart gewählt wird, dass sie niedriger als der Flammpunkt des entsprechenden Kraftstoffes ist.

9. Kraftstoffversorgungssystem nach einem der Ansprüche 1 bis 8, **dadurch gekennzeichnet, dass** der Kompressor (2.1) und/oder der Kondensator (2.3) von dem Verbrennungsmotor (3.1) angetrieben wird/werden.

10. Kraftstoffversorgungssystem nach einem der Ansprüche 1 bis 9, **dadurch gekennzeichnet, dass** der Kompressor (2.1) und/oder der Kondensator (2.3) der Kühleinrichtung (2) durch einen von dem Verbrennungsmotor (3.1) unabhängigen Motor (7) angetrieben wird/werden.

11. Kraftstoffversorgungssystem nach einem der Ansprüche 1 bis 10 für einen Verbrennungsmotor eines militärischen Fahrzeugs.

12. Kraftstoffversorgungssystem nach einem der Ansprüche 1 bis 11, **dadurch gekennzeichnet, dass** die Kühleinrichtung (2) die fahrzeugeigene Kampfraumkühlanlage ist.

## Claims

1. Fuel supply system for an internal combustion engine (3.1) of a motor vehicle, having at least one fuel tank (1.1, 1.4) for storing the fuel and having at least one cooling device (2) for fuel cooling, which is separate from an engine cooling arrangement (3) and which comprises a compressor (2.1), a condenser (2.3) and at least one evaporator (2.9, 2.6, 2.11), wherein the evaporator (2.9, 2.6, 2.11) of the cooling device (2) is arranged in the fuel tank (1.1, 1.4), **characterized in that** an electrically controllable valve (2.8, 2.5, 2.10) is connected upstream of the at least one evaporator (2.9, 2.6, 2.11), such that the at least one fuel tank (1.1, 1.4) and/or an interior compartment (4) of the vehicle can be cooled in temperature-dependent fashion by means of a measuring and control device (6), and **in that** the fuel supply system comprises at least two fuel tanks (1.1, 1.4), wherein the first fuel tank (1.1) is a main fuel tank which can be filled from the outside with fuel, and the second fuel tank (1.4), which is connected to the first fuel tank (1.1) via a first fuel line (1.2), is an extraction tank from which the fuel can be fed to the internal combustion engine (3.1).

2. Fuel supply system according to Claim 1, **characterized in that** the cooling device (2) comprises at least one second evaporator (2.6) which is arranged in parallel with respect to the evaporator (2.9).

3. Fuel supply system according to Claim 2, **characterized in that** the second evaporator (2.6) serves for cooling the air of the interior compartment (4) of the vehicle.

4. Fuel supply system according to any of Claims 1 to 3, **characterized in that** the first evaporator (2.9) of the cooling device (2) is arranged in the first fuel tank (1.1) or in the second fuel tank (1.4).

5. Fuel supply system according to any of Claims 1 to 3, **characterized in that** the cooling device (2) comprises at least one third evaporator (2.11) which is arranged in parallel with respect to the first evaporator (2.9), and **in that** the first evaporator (2.9) is arranged in the first fuel tank (1.1) and the third evaporator (2.11) is arranged in the second fuel tank (1.4).

6. Fuel supply system according to any of Claims 1 to 5, **characterized in that** temperature sensors (6.1-6.3) for monitoring the at least one or the respective fuel tank (1.1, 1.4) and/or the interior compartment (4) of the vehicle are provided, the measured values of which can be fed to the measuring and control device (6).

7. Fuel supply system according to any of Claims 1 to 6, **characterized in that** the electrically or electronically actuatable valves (2.5, 2.8, 2.10) assigned to the evaporators (2.6, 2.9, 2.11) are automatically activatable and deactivatable by means of the measuring and control device (6).

8. Fuel supply system according to any of Claims 1 to 7, **characterized in that** the temperature of the fuel in the fuel tank (1.1) is selected so as to be lower than the ignition point of the corresponding fuel.

9. Fuel supply system according to any of Claims 1 to 8, **characterized in that** the compressor (2.1) and/or the condenser (2.3) are/is driven by the internal combustion engine (3.1).

10. Fuel supply system according to any of Claims 1 to 9, **characterized in that** the compressor (2.1) and/or the condenser (2.3) of the cooling device (2) are/is driven by a motor (7) which is independent of the internal combustion engine (3.1).

11. Fuel supply system according to any of Claims 1 to 10 for an internal combustion engine of a military vehicle.

12. Fuel supply system according to any of Claims 1 to 11, **characterized in that** the cooling device (2) is the on-board combat-space cooling system.

## Revendications

1. Système d'alimentation en carburant pour un moteur à combustion interne (3.1) d'un véhicule automobile, comprenant au moins un réservoir de carburant (1,1, 1.4) servant au stockage du carburant et au moins un dispositif de refroidissement (2) séparé du refroidissement de moteur (3) et servant au refroidissement du carburant, lequel dispositif de refroidissement comporte un compresseur (2.1), un condenseur (2.3) et au moins un évaporateur (2.9, 2.6, 2.11), dans lequel l'évaporateur (2.9, 2.6, 2.11) du dispositif de refroidissement (2) est disposé dans le réservoir de carburant (1,1, 1.4), **caractérisé en ce qu'**une soupape (2.8, 2.5, 2.10) réglable électriquement est montée en amont de l'au moins un évaporateur (2.9, 2.6, 2.11), de telle sorte que l'au moins un réservoir de carburant (1.1, 1.4) et/ou un espace intérieur (4) du véhicule puissent être refroidis en fonction de la température par le biais d'un dispositif de mesure et de régulation (6), et **en ce que** le système d'alimentation en carburant comporte au moins deux réservoirs de carburant (1.1, 1.4), le premier réservoir de carburant (1.1) étant un réservoir de carburant principal pouvant être rempli de carburant depuis l'extérieur et le deuxième réservoir de carburant (1.4) relié au premier réservoir de carburant (1.1) par le biais d'une première conduite de carburant (1.2) étant un réservoir de prélèvement à partir duquel le carburant peut être acheminé jusqu'au moteur à combustion interne (3.1).

2. Système d'alimentation en carburant selon la revendication 1, **caractérisé en ce que** le dispositif de refroidissement (2) comporte au moins un deuxième évaporateur (2.6) disposé parallèlement à l'évaporateur (2.9) .

3. Alimentation en carburant selon la revendication 2, **caractérisée en ce que** le deuxième évaporateur (2.6) sert au refroidissement de l'air de l'espace intérieur (4) du véhicule.

4. Système d'alimentation en carburant selon l'une des revendications 1 à 3, **caractérisé en ce que** le premier évaporateur (2.9) du dispositif de refroidissement (2) est disposé dans le premier réservoir de carburant (1.1) ou dans le deuxième réservoir de carburant (1.4).

5. Système d'alimentation en carburant selon l'une des revendications 1 à 3, **caractérisé en ce que** le dispositif de refroidissement (2) comporte au moins un troisième évaporateur (2.11) disposé parallèlement au premier évaporateur (2.9), et **en ce que** le premier évaporateur (2.9) est disposé dans le premier réservoir de carburant (1.1) et le troisième évaporateur (2.11) est disposé dans le deuxième réservoir de carburant (1.4).

6. Système d'alimentation en carburant selon l'une des revendications 1 à 5, **caractérisé en ce que** des capteurs de température (6.1-6.3) sont prévus pour la surveillance de l'au moins un réservoir de carburant ou du réservoir de carburant (1.1, 1.4) respectif et/ou de l'espace intérieur (4) du véhicule, capteurs dont les valeurs de mesure peuvent être fournies au dispositif de mesure et de régulation (6).

7. Système d'alimentation en carburant selon l'une des revendications 1 à 6, **caractérisé en ce que** les soupapes (2.5, 2.8, 2.10) associées aux évaporateurs (2.6, 2.9, 2.11) et pouvant être commandées électriquement ou électroniquement peuvent être connectées et déconnectées automatiquement à l'aide du dispositif de mesure et de régulation (6).

8. Installation d'alimentation en carburant selon l'une des revendications 1 à 7, **caractérisée en ce que** la température du carburant dans le réservoir de carburant (1.1) est sélectionnée de telle sorte qu'elle est inférieure au point d'inflammation du carburant correspondant.

9. Système d'alimentation en carburant selon l'une des revendications 1 à 8, **caractérisé en ce que** le compresseur (2.1) et/ou le condenseur (2.3) est/sont entraîné(s) par le moteur à combustion interne (3.1).

10. Système d'alimentation en carburant selon l'une des revendications 1 à 9, **caractérisé en ce que** le compresseur (2.1) et/ou le condenseur (2.3) du dispositif de refroidissement (2) est/sont entraîné(s) par un moteur (7) indépendant du moteur à combustion interne (3.1).

11. Système d'alimentation en carburant selon l'une des revendications 1 à 10 pour un moteur à combustion interne d'un véhicule militaire.

12. Système d'alimentation en carburant selon l'une des revendications 1 à 11, **caractérisé en ce que** le dispositif de refroidissement (2) est le système de climatisation de compartiment de combat propre au véhicule.
